# EUROPEAN PATENT APPLICATION

(11) **EP 0 813 920 A2**
(43) Date of publication of application: **29.12.1997**
(21) Application number: 97109879.3
(22) Date of filing: 17.06.1997
(51) Int. Cl.: B09B 3/00

(54) **Garbage processor**

(30) Priority: 17.06.1996 JP 155787/96
(71) Applicant: Kabushiki Kaisha Nissei Giken, Tottori-shi, Tottori 680 (JP)
(72) Inventor: Shinya, Narao, Kabushiki Kaisha Nissei Giken, Tottori-shi, Tottori 680 (JP)
(74) Representative: DIEHL GLAESER HILTL & PARTNER

(57) **Abstract**

A garbage processor includes a garbage crusher for breaking up garbage into pieces, a dehydrator (2) connected to the garbage crusher for dehydrating the garbage pieces, a garbage vessel (3) connected to the dehydrator for receiving the dehydrated garbage pieces, a storage container (6c) provided within the garbage vessel (3) for storing and stirring the garbage pieces therein, and a heater (6a) provided in the storage container (6c) for keeping the garbage pieces at a predetermined temperature and a decomposing microbe active to decompose most of the garbage pieces into water and CO₂.

## Description

The present invention relates to garbage processors for decomposing garbage such as pieces of meat, fish, fruit, vegetable, and left-over rice into water and CO₂.

A conventional garbage processor includes a garbage processing vessel installed apart from the sink and a decomposing microbe put in the processing vessel to decompose garbage in the processing vessel into water and carbon dioxide CO₂ in a few days.

However, the above processor does not break up garbage into pieces and takes a long time to decompose it into water and CO₂. Consequently, the processing vessel is filled quickly with unprocessed garbage, preventing any new charge of garbage.

Also, it is necessary to carry garbage from the sink to the separate garbage processing vessel, contaminating hands, releasing odor, and/or staining the floor. The water content of garbage is not kept constant. The temperature of the processing vessel is not kept constant so that the decomposing microbe is not sufficiently active to provide efficient decomposition.

Accordingly, it is an object of the invention to provide a garbage processor capable of decomposing garbage with a decomposing microbe faster than before without staining one's clothing or the floor.

According to the invention there is provided a garbage processor, which includes a garbage crusher for breaking up garbage into pieces; a dehydrator connected to the garbage crusher for dehydrating the garbage pieces; a garbage vessel connected to the dehydrator for receiving the dehydrated garbage pieces; a storage container provided within the garbage vessel for storing and stirring the garbage pieces therein; and a heater provided in the storage container for keeping the garbage pieces at a predetermined temperature and a decomposing microbe active to decompose most of the garbage pieces into water and CO₂.

The garbage crusher breaks up the garbage into pieces having diameter of preferably 1 to 10 mm, more preferably 3 to 7 mm.

The present invention is explained in more detail by means of the accompanying drawing, wherein
- Fig. 1: shows schematically a sectional view of a garbage processor according to the invention including a dehydrator;
- Fig. 2: shows a sectional view of the processor of Fig. 1, however seen from a direction which is in a right angle to that of Fig. 1 and without the dehydrator;
- Fig. 3: shows a perspective view of a case which houses a garbage vessel and a dehydrator, seen from the side having connecting hoses;
- Fig. 4: shows the case of Fig. 3, but seen from the side having the front door;
- Fig. 5: shows a sectional view of a water jacket of a part of the top of the garbage vessel; and
- Fig. 6: shows a view similar to Fig. 2, but in case of a garbage processor having a garbage sensor.

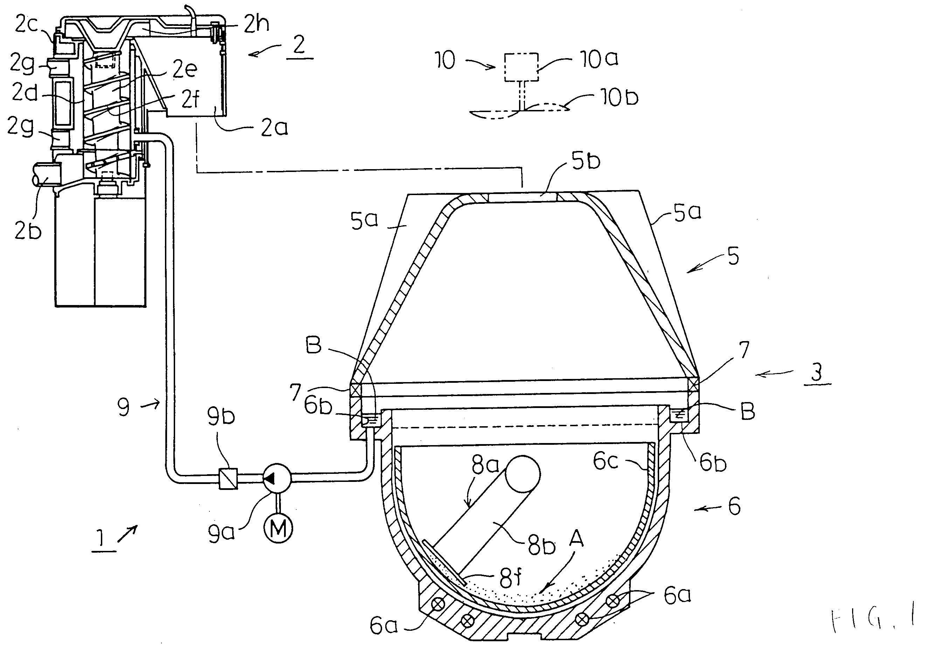

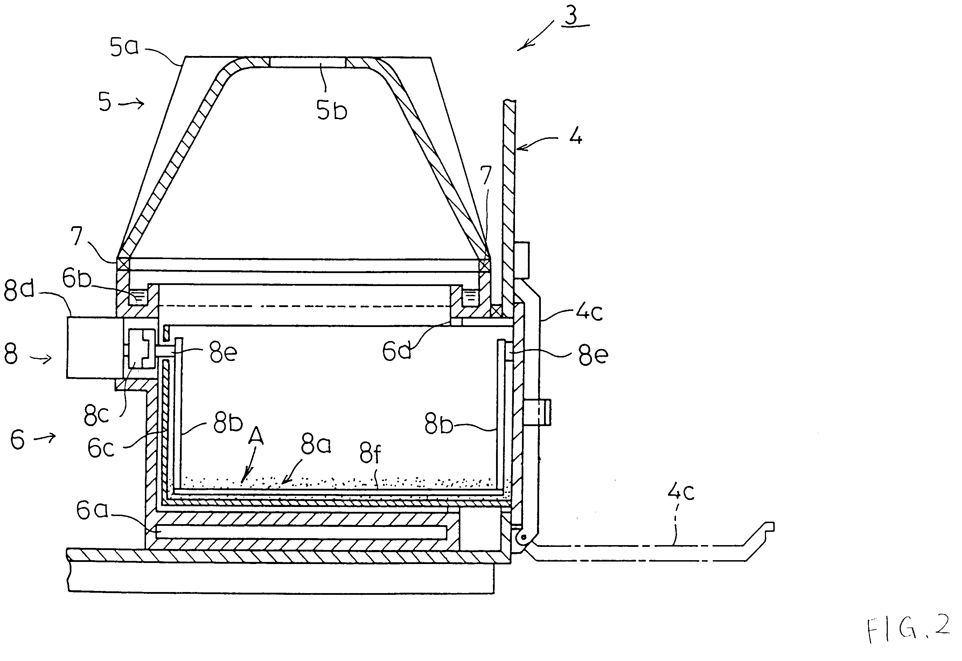

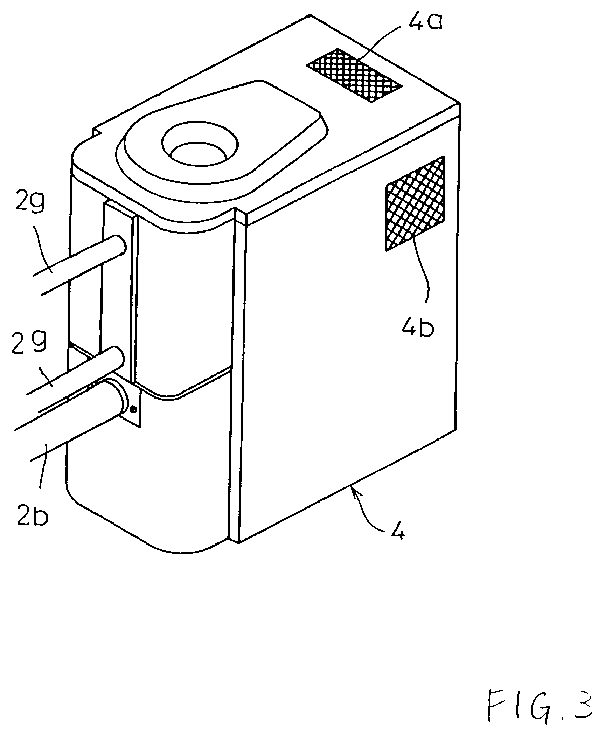

In Figs. 1-4, a garbage processor 1 includes a dehydrator 2 for dehydrating garbage crushed in a garbage crusher connected to a sink, and a garbage vessel 3 for receiving the dehydrated garbage from the dehydrator 2 via a discharge chute 2a. The dehydrator 2 and the garbage vessel 3 are housed in a compact case 4 so that it is easy to attach it to a sink leaving a large space below the sink. The garbage processor according to the invention has a high decomposition speed of garbage.

The garbage crusher used herein is a conventional one such as shown in Japanese patent application Kokoku No. 121363/95 or Japanese patent application Kokai No. 292996/94, which is connected to the outlet of a sink to crush garbage along with running water.

The garbage is sent from the garbage crusher to the dehydrator 2 via a linking hose 2b and is moved upwardly by the teeth 2f of a screw 2e driven within a reticulate screen 2d. The previous garbage is compressed by the following one driven by the screw 2e, and water is drained through the reticulate screen 2d via a drain hose 2g to a sewer. The crushed and dehydrated garbage is thrown into the garbage vessel 3 from an outlet 2h on the upper end of the reticulate screen 2d via the discharge chute 2a.

The garbage is thrown into the casing 2c of the dehydrator 2 via the linking hose 2b so that it is unnecessary to carry the garbage into the garbage vessel 3 which has been separated from the sink. Also, there is no danger of staining one's clothes or floor.

The garbage vessel 3 store the crushed and dehydrated garbage in an airtight fashion and includes a cooling top 5, a heating bottom 6, and a packing 7 provided between the cooling top 5 and the heating bottom 6 for keeping them airtight. The cooling top 5 is made from a heat conductive material, such as an aluminium alloy, and has a substantially trapezoidal cross-section and a plurality of cooling fins 5a. Also, it has an opening 5b for communication with the discharge chute 2a to receive the dehydrated garbage.

The heating bottom 6 has a plurality of heaters 6a embedded in the bottom and a gutter 6b on the upper edge for running water. A storage container 6c is removable through an opening 6d provided in the front face of the compact case 4. A blade 8 is provided on the storage container 6c for stirring the stored garbage and decomposing microbes A are added in the storage container 6c. The heater 6a of the heating bottom 6 keeps the storage container 6c at a predetermined temperature.

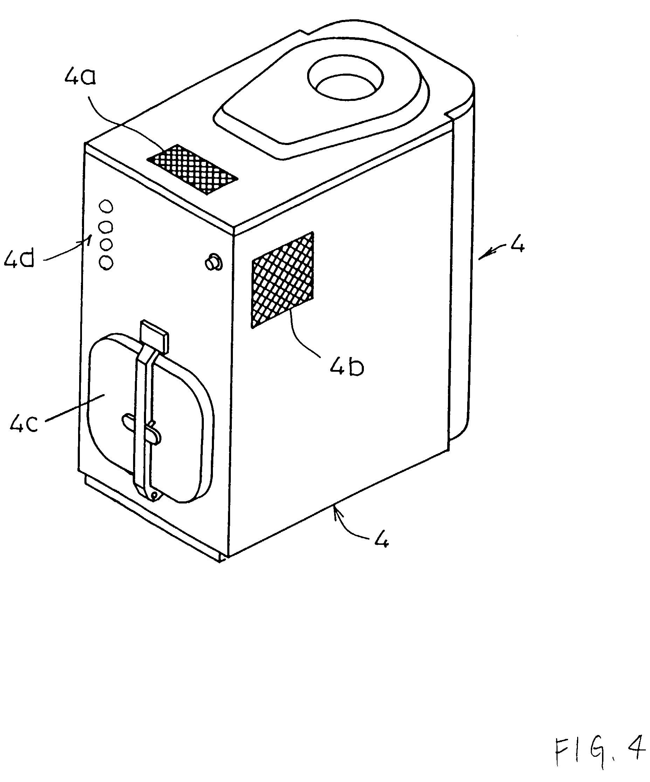

In Figs. 3 and 4, a ventilation opening 4a is provided in the top of the compact case 4 and has a network for preventing entrance of dirt. Air enters through the ventilation opening 4a and cools the cooling top with the cooling fins 5a. A pair of discharge opening 4b are provided on opposite sides of the compact case 4 for discharging the air entered from the ventilation opening 4a. A pair of drain hoses 2g extend outwardly from the rear face of the compact case 4 above the linking hose 2b.

The temperature of the storage container 6c is set so as to not only keep the water content of the garbage constant but also to enhance the activity of the decomposing microbes. For example, it is set so as to keep the bottom of the storage container 6c at 50^{o} to 60°C depending on the type of decomposing microbe A.

The decomposing microbe A is added to the storage container 6c by drawing the storage container 6c out of the compact case 4 through the front door 4c. Alternatively, the decomposing microbe A is mixed with the garbage thrown into the sink.

The decomposing microbe A is used as a powder or a liquid together with material for nutrition to sustain living. It is housed in a capsule made from a material to be molten at temperatures of the storage container 6c.

The decomposing microbe A may be added by an automatic dispenser at predetermined times, which not only keeps the microbe from adhering to one's hands but also keeps the amount of addition accurate.

For example, the amount and the frequency of addition of the decomposing microbe A are approximately 2.5 gram and one time a day, respectively.

The blade 8 is a substantially C-shaped stirring wing 8a having a pair of opposed arm sections 8b rotatably attached to the storage container 6c, with one of the arm sections 8b connected to a driving unit 8d via a clutch 8c. When the stirring wing 8a is swung or rotated about pivots 8e, a bottom section 8f between the arm sections 8b is swung or rotated in the vicinity of the bottom of the storage container 6c to gently stir the garbage at a constant temperature. Consequently, it is prevented to heat only one part of the garbage on the bottom of the heating bottom 6 but to dry the whole garbage evenly. The garbage and the decomposing microbe A are mixed so evenly that not only it is easy to decompose the garbage into water and CO₂ but also the decomposition speed is increased. The frequency of stirring times is 3 to 5 times a day, for example.

When the storage container 6c is drawn from the compact case 4 through the front door 4c, the clutch 8c is separated to stop the stirring wind 8a. When the storage container 6c is pushed into the compact case 4, the clutch 8c engages the driving unit 8d for the stirring operation.

The garbage is dried in the storage container 6c and decomposed by the decomposing microbe A into water and CO₂. In order to facilitate the stirring of the garbage and to reduce the decomposition time, it is preferred to use a garbage crusher capable of crushing garbage into pieces having diameters from 1 to 10 mm, preferably from 3 to 7 mm. The best result is obtained with diameters of approximately 5 mm.

The vapor is cooled into water B in the cooling top 5 and collected in the gutter 6b. The water B is sent into the dehydrator 2 via a discharge path 9 by a drain pump 9a which is operated at predetermined intervals or times. A drain detector 9b is provided in the discharge path 9 to generate a signal which indicates that the garbage contains much water and controls the heater 6a and the driving unit 8d for the blade 8.

The water B transferred to the dehydrator 2 is mixed with a new charge of garbage and subjected to the above dehydration process. If there is no new charge of garbage, the water B is discharged to a sewerage via the drain hose 2g. Consequently, the odor of garbage does not leak out of the dehydrator 2 and the garbage vessel 3 and does not pollute the air. In this way, the water content of garbage is regulated to be constant.

The processor 1 according to the invention is installed below a sink so that the space above the sink is usable without blocking cooking and washing operations.

In Fig. 1, a motor 10a and a fan 10b constitute a blower 10, which is installed above the cooling top 5 to blow air from the inlet 4a of the compact case 4 to the cooling fins 5a and discharge it through the outlet 4b, thereby increasing the cooling rate.

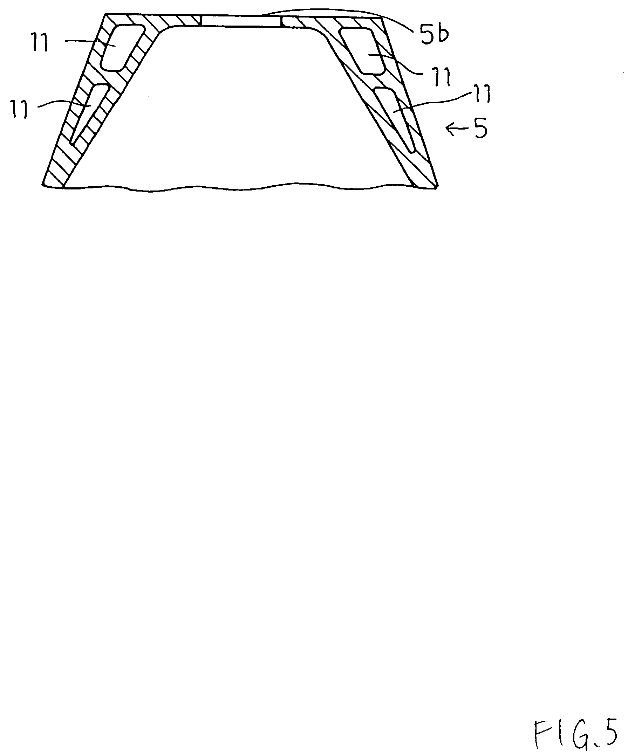

In Fig. 5, water jackets 11 are provided in the cooling top 5 and connected to the drainage pipe of the sink to cool the cooling top 5. This structure is not only simpler than that of the above cooling fins 5a for cooling the cooling top 5 but also lower in cost and higher in the cooling rate than the above fin 5a structure.

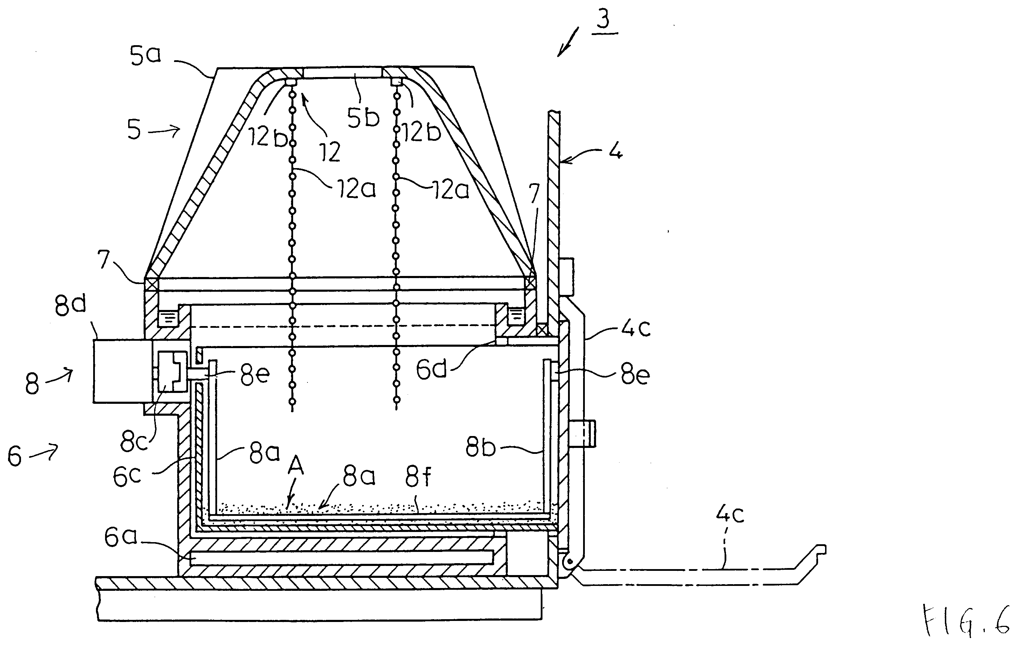

In Fig. 6, a garbage sensor 12 is provided within the storage container 6c of the garbage vessel 3 to control the amount of garbage stored. The garbage sensor 12 includes a pair of insulation members 12b fixed to the top of the storage container 6c and a pair of flexible conductive members 12a, such as ball chains or elongated spring materials, hanging from the insulation members 12b and having lower ends at predetermined distances from the bottom of the storage container 6c, across which a voltage is applied for electrical conduction.

When wet garbage reaches the lower ends of the flexible conductor members 12a, electric current flows between the flexible conductor members 12a through the garbage. If the garbage is dry or contains little water, there is no electrical conduction. However, when the blade 8 stirs the garbage up and down or back and forth, an electric current flows across the flexible conductor members 12a. Consequently, it is possible to detect the amount of garbage in the storage container 6c no matter whether the garbage is wet or dry.

Alternatively, only one flexible conductive member 12a may be attached to one of the insulation members 12b, and a voltage is applied across the flexible conductive member 12a and the storage container 6c for electrical conduction.

Indicator lamps 4d are provided on the front face of the compact case 4 to indicate whether there is an electric conduction through the flexible conductor member 12a so that the user, such as a cook, can check the amount of garbage in the storage container 6c without pulling the storage container 6c from the garbage vessel 3. The flexible conductor members 12a are so flexible that they do not block the movement of the storage container 6c into and from the garbage vessel 4.

As has been described above that according to the invention the garbage processor is installed below a sink so that the space above the sink is usable for work such as cooking and washing. The garbage crusher breaks up garbage into pieces so that it is possible to dry them quickly in the storage container by stirring under heat and to mix them with a decomposing microbe efficiently, thereby speeding up the decomposition. The charge of garbage is done through the drainage pipe of a sink so that there is no danger of staining clothes and floor and leaking odor. The water is evaporated in the garbage vessel to keep the water content constant.

The preferred particle size of the crushed garbage ranges from 1 to 10 mm,more particularly from 3 to 7 mm, to facilitate the stirring by the blade within the storage container and the mixing with a decomposing microbe evenly, thereby speeding up the decomposition into water and CO₂.

## Claims

1. A garbage processor, characterized by
a garbage crusher for breaking up garbage into pieces,
a dehydrator (2) connected to said garbage crusher for dehydrating the garbage pieces,
a garbage vessel (3) connected to said dehydrator (2) for receiving the dehydrated garbage pieces,
a storage container (6c) provided within said garbage vessel (3) for storing and stirring the garbage pieces therein, and
a heater (6a) provided in said storage container (6c) for keeping the garbage pieces at a predetermined temperature and a decomposing microbe active to decompose most of the garbage pieces into water and carbon dioxide.

2. A garbage processor according to claim 1, characterized by a garbage crusher which is able to break up the garbage into pieces having diameter of 1 to 10 mm, preferably 3 to 7 mm.

3. Process for decomposing garbage into water and carbon dioxide, wherein garbage is decomposed by means of a decomposing microbe, characterized by
a) breaking up the garbage into pieces having a diameter of 1 to 10 mm,
b) dehydrating said garbage pieces as far as necessary,
c) mixing the dehydrated garbage pieces with the decomposing microbe, and
d) storing and stirring the garbage pieces mixed with the decomposing microbe, while keeping constant the water content and the temperature of the dehydrated garbage pieces.
